# EUROPEAN PATENT APPLICATION

(11) **EP 4 557 387 A1**
(43) Date of publication of application: **21.05.2025**
(21) Application number: 23860815.2
(22) Date of filing: 28.08.2023
(51) Int. Cl.: H01M 4/04, H01M 4/62, H01M 4/525, H01M 4/1391, H01M 4/02

(54) **METHOD FOR MANUFACTURING ELECTRODE FOR SECONDARY BATTERY**

(30) Priority: 29.08.2022 KR 20220108709; 25.08.2023 KR 20230112358
(71) Applicant: LG Energy Solution, Ltd., Seoul 07335 (KR)
(72) Inventor: HONG, You Lee, Daejeon 34122 (KR); SHIN, Du Hyeon, Daejeon 34122 (KR); KWON, Hyeok Yong, Daejeon 34122 (KR); HWANG, Nam Ick, Daejeon 34122 (KR)
(74) Representative: Plasseraud IP
(86) International application number: PCT/KR2023/012721
(87) International publication number: WO 2024/049139

(57) **Abstract**

The present disclosure relates to a method of preparing an electrode for a secondary battery which effectively reduces a residual amount of moisture in the electrode and may significantly improve electrode adhesion at the same time. The method of preparing an electrode for a secondary battery includes steps of: preparing an electrode in which an electrode active material layer is formed; rolling the electrode; and drying the rolled electrode, wherein the drying is performed such that at least a partial range of drying temperature is 170°C to 210°C which is a temperature above a melting point (170°C) of a polyvinylidene fluoride (PVDF)-based binder resin.

## Description

### TECHNICAL FIELD

### Cross-reference to Related Applications

This application claims priority from Korean Patent Application Nos.10-2022-0108709, filed on August 29, 2022, and 10-2023-0112358, filed on August 25, 2023, the disclosures of which are incorporated by reference herein.

### Technical Field

The present disclosure relates to a method of preparing an electrode for a secondary battery, and particularly to a method of preparing an electrode for a secondary battery which may significantly improve adhesion between an electrode active material layer and an electrode current collector by effectively reducing a residual amount of moisture in the electrode while minimizing a decrease in crystallinity of a binder.

### BACKGROUND ART

Recently, requirements for the use of alternative energy or clean energy have increased due to the rapid increase in the use of fossil fuels. As a part of this trend, power generation and electricity storage using electrochemistry are the most actively researched areas.

A typical example of an electrochemical device using such electrochemical energy may be a secondary battery and there is a trend that its usage area is expanding more and more. Particularly, in recent years, demand for secondary batteries having high energy density, that is, high-capacity lithium secondary batteries as an energy source has been significantly increased as technology development and demand with respect to portable devices, such as portable computers, mobile phones, and cameras, have increased.

Among these secondary batteries, considerable research has been conducted to develop a lithium secondary battery that has long cycle life and low self-discharge rate while exhibiting high energy density and operating potential.

The lithium secondary battery is composed of a structure in which a chargeable and dischargeable electrode assembly of a positive electrode/separator/negative electrode structure is mounted in a battery case, wherein the electrodes of the positive electrode and negative electrode are prepared by applying a slurry, in which an active material and a binder resin component are mixed, to one surface or both surfaces of a metal current collector to form an electrode active material layer and then drying and rollingthe electrode active material layer.

In this case, conventionally, in order to remove moisture remaining in the electrode after the rolling of the active material layer, a drying process was generally performed at a low temperature at which a conventional binder resin, for example, a polyvinylidene fluoride (PVDF)-based binder resin, does not melt. If, in a case in which the drying process is performed at a temperature above a melting point (170°C) of the polyvinylidene fluoride (PVDF)-based binder resin after the rolling, since crystallinity is decreased as the polyvinylidene fluoride (PVDF)-based binder resin melts, brittleness of the electrode is reduced, and, as a result, electrode strength is decreased to cause a problem of poor durability. In contrast, in a case in which the drying is performed at a temperature of 170°C or less, since long drying time is required to reduce a residual amount of moisture in the electrode to a desired level, there is another problem of reduced productivity.

Thus, there is a need to develop a new method of preparing an electrode which may prevent the decrease in electrode strength during the preparation of the electrode and may improve adhesion by reducing the residual amount of moisture in the electrode to the desired level.

### DISCLOSURE OF THE INVENTION

### TECHNICAL PROBLEM

An aspect of the present disclosure provides a method of preparing an electrode for a secondary battery in which, when a drying process is performed after rolling, the drying process is performed such that at least a partial range of drying temperature is above a melting point (170°C) of a binder and total drying time is 5 seconds or less.

### TECHNICAL SOLUTION

According to an embodiment, the present disclosure provides a method of preparing an electrode for a secondary battery which includes steps of: preparing an electrode in which an electrode active material layer is formed on an electrode current collector; rolling the electrode; and drying the rolled electrode, wherein the drying is performed such that at least a partial range of drying temperature is 170°C to 210°C.

Total drying time of the rolled electrode in the above method may be in a range of 2 seconds to 5 seconds.

Also, the drying of the rolled electrode may be performed by a roll-to-roll process.

The drying of the rolled electrode is performed at a temperature of 130°C or higher, and may specifically include steps of: performing a first drying process at 130°C to 150°C; performing a second drying process at 150°C to 170°C; and performing a third drying process at 170°C to 210°C.

### ADVANTAGEOUS EFFECTS

According to a method of preparing an electrode for a secondary battery of the present disclosure, when a drying process is performed after rolling, since the drying process is performed such that a partial range of drying temperature is above a melting point (170°C) of a binder and total drying time is 5 seconds or less, a residual amount of moisture in the electrode may be effectively reduced while minimizing a decrease incrystallinity of the binder, and thus, adhesion between an electrode active material layer and an electrode current collector may be significantly improved and, accordingly, a lithium secondary battery with improved durability may be achieved.

### BRIEF DESCRIPTION OF THE DRAWINGS

The following drawings attached to the specification illustrate preferred examples of the present disclosure by example, and serve to enable technical concepts of the present disclosure to be further understood together with detailed description of the invention given below, and therefore the present disclosure should not be interpreted only with matters in such drawings.
FIG. 1 is a graph illustrating a result of evaluating a residual amount of moisture in an electrode according to Experimental Example 1.
FIG. 2 is a graph illustrating a result of evaluating electrode adhesion according to Experimental Example 2.

### MODE FOR CARRYING OUT THE INVENTION

Hereinafter, the present disclosure will be described in more detail.

It will be understood that terms (including technical and scientific terms) or words used in the specification and claims may be intended to have meanings understood by those skilled in the art. In addition, terms defined in general dictionaries should not be interpreted abnormally or exaggeratedly, unless clearly specifically defined.

The terminology used herein is for the purpose of describing particular example embodiments only and is not intended to be limiting of the present disclosure. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, when it is said that a part includes a certain component, it means that other components may be further included rather than excluding other components unless specifically stated to the contrary.

Hereinafter, the present disclosure will be described in more detail.

### Method of Preparing Electrode for Secondary Battery

A method of preparing an electrode for a secondary battery of the present disclosure includesthe steps of:
(S1) preparing an electrode in which an electrode active material layer is formed on an electrode current collector;
(S2) rolling the electrode; and
(S3) drying the rolled electrode,
wherein the drying may be performed such that at least a partial range of drying temperature is 170°C to 210°C.

Conventionally, a method was required in which, after rolling an electrode in which an electrode active material layer was formed by coating one surface or both surfaces of a metal current collector with a slurry in which an active material and a binder resin component were mixed, a drying process was performed at a low temperature (below 170°C) where the binder resin does not melt so as to prevent a decrease in crystallinity of the binder resin, for example, a polyvinylidene fluoride (PVDF)-based binder resin. However, in a case in which the drying is performed at the low temperature, long drying time is required to reduce a residual amount of moisture in the electrode to a desired level, and, as a result, there occurs a problem of reduced productivity.

As a result of a significant amount of research conducted to solve this problem, the present inventors have found that, since a drying process after rolling is performed such that a partial range of drying temperature is above a melting point (170°C) of a polyvinylidene fluoride (PVDF)-based binder resin and total drying time is 5 seconds or less, a residual amount of moisture in the electrode may be effectively reduced while minimizing a decrease in crystallinity of the binder resin, thereby leading to the completion of the present disclosure.

This will be explained in detail below.

### (S1) Step of Preparing Electrode

The method of preparing an electrode for a secondary battery according to the present disclosure may include a step of preparing an electrode in which an electrode active material layer is formed on an electrode current collector.

After preparing an electrode slurry composition by mixing or dispersing an electrode active material and a binder in a solvent, the electrode active material layer may be prepared by coating the electrode slurry composition on an electrode current collector and drying the coated electrode slurry composition.

In this case, a coating process of the electrode slurry composition on the electrode current collector may be performed by a method commonly known in the art, for example, may be performed by uniformly dispersing the electrode slurry composition using a doctor blade or through a method such as die casting, comma coating, and screen printing.

Also, a drying process of the electrode slurry composition coated on the electrode current collector may be performed according to a commonly known method, for example, may be performed by a vacuum heat treatment in a predetermined temperature range or a heat treatment method such as hot air injection.

Furthermore, a temperature range of the drying process may be 60°C to 130°C, particularly 80°C to 130°C, and more particularly 100°C to 130°C. In this case, when the temperature satisfies the above range, a moisture content in the electrode active material layer may be minimized, and, since volatile components included during the process are sufficiently removed, degradation of battery characteristics and occurrence of a side reaction due to these components during subsequent charge and discharge of the battery may be prevented. Particularly, since a migration phenomenon of the electrode active material or binder constituting the electrode active material layer is suppressed by performing the drying process at a temperature of 130°C or less, the electrode active material or binder is distributed evenly in the electrode active material layer, and thus, an increase in resistance of the secondary battery and a decrease in adhesion between the current collector and the electrode active material layer may be improved.

Time required for the drying process may be in a range of 5 minutes to 3 hours, particularly 5 minutes to 20 minutes, and more particularly 5 minutes to 10 minutes.

The electrode prepared by the method of the present disclosure may be a positive electrode and/or a negative electrode, and the positive electrode is specifically preferred.

Specifically, in a case in which the electrode prepared by the method of the present disclosure is the positive electrode, a positive electrode active material including a lithium composite metal oxide capable of reversibly intercalating and deintercalating lithium, which includes lithium and at least one metal such as cobalt, manganese, nickel, or aluminum, may be used as the electrode active material.

Specifically, the positive electrode active material may include lithium-cobalt-based oxide (e.g., LiCoO₂, etc.), lithium-manganese-based oxide (e.g., LiMnO₂, LiMn₂O₄, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li (Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li (Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), Ti, and molybdenum (Mo), and p2, q2, r3, and S2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the positive electrode active material may include at least one selected from the group consisting of a lithium cobalt-based oxide, a lithium-manganese-based oxide, a lithium-nickel-manganese-cobalt-based oxide, and a lithium-nickel-cobalt-transition metal (M) oxide.

Specifically, the positive electrode active material may include at least one selected from a lithium-nickel-manganese-cobalt-based oxide having a nickel content of 50 atm% or more, specifically, 55 atm% or more and/or a lithium-nickel-cobalt-transition metal (M) oxide having a nickel content of 50 atm% or more, specifically, 55 atm% or more. Specifically, the positive electrode active material may include a lithium-nickel-cobalt-transition metal (M) oxide represented by Formula 1 below.

[Formula 1] LiₐNiₓCo_{y}M¹_{z}M²_{w}O₂

In Formula 1,
M¹ is manganese (Mn), aluminum (Al),or a combination thereof, and may preferably be Mn or Mn and Al.

M² is at least one selected from the group consisting of Al, zirconium (Zr), tungsten (W), titanium (Ti), magnesium (Mg), calcium (Ca), and strontium (Sr), may preferably be at least one selected from the group consisting of Al, Zr, yttrium (Y), Mg, and Ti, and may more preferably be Al.

a represents a molar ratio of lithium in the lithium-nickel-cobalt-transition metal (M) oxide, wherein a may satisfy 0.8≤a≤1.2, particularly 0.85≤a≤1.15, or more particularly 0.9≤a≤1.05. When the molar ratio of the lithium satisfies the above range, a crystal structure of the lithium-nickel-cobalt-transition metal (M) oxide may be stably formed.

x represents a molar ratio of nickel among total metals excluding lithium in the lithium-nickel-cobalt-transition metal (M) oxide, wherein x may satisfy 0.55≤x<1, particularly 0.55≤a≤0.95, more particularly 0.60≤a≤0.95, and even more particularly 0.8≤x≤0.95. When the molar ratio of the nickel satisfies the above range, high energy density may be exhibited to achieve high capacity.

y represents a molar ratio of cobalt among the total metals excluding lithium in the lithium-nickel-cobalt-transition metal (M) oxide, wherein y may satisfy 0<y≤0.3, preferably 0.001<y<0.3, particularly 0.025≤b≤0.20, more particularly 0.01≤y<0.20, and even more particularly 0.01≤y<0.15. When the molar ratio of the cobalt satisfies the above range, good resistance characteristics and output characteristics may be achieved.

z represents a molar ratio of element M¹ among the total metals excluding lithium in the lithium-nickel-cobalt-transition metal (M) oxide, wherein z may satisfy 0<z≤0.3, preferably 0.001<z≤0.25, more preferably 0.01≤z≤0.20, more preferably 0.01≤z≤.20, and more particularly 0.01≤z≤0.15. When the molar ratio of the element M¹ satisfies the above range, structural stability of the positive electrode active material is excellent.

w represents a molar ratio of element M² among the total metals excluding lithium in the lithium-nickel-cobalt-transition metal (M) oxide, wherein w may satisfy 0<w≤0.2, particularly 0<w≤0.1, and preferably 0<w≤0.05.

Specifically, in order to achieve a high-capacity battery, the positive electrode active material may include a lithium composite transition metal oxide, such as Li(Ni_{0.65}Mn_{0.2}Co_{0.15})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, or Li(Ni_{0.90}Mn_{0.05}Co_{0.05})O₂, and may preferably include Li(Ni_{0.86}Mn_{0.07}Co_{0.05}Al_{0.02})O₂ containing nickel (Ni) in an amount of 80 mol% or more based on the total number of moles of transition metals.

The positive electrode active material according to the present disclosure, if necessary, may further include a coating layer containing at least one coating element selected from the group consisting of Al, Ti, W, boron (B), fluorine (F), phosphorus (P), Mg, Ni, cobalt (Co), Fe, Cr, V, copper (Cu), Ca, zinc (Zn), Zr, niobium (Nb), molybdenum (Mo), Sr, antimony (Sb), bismuth (Bi), silicon (Si), and sulfur (S) on surfaces of lithium nickel-based oxide particles. Preferably, the coating element may be Al, B, Co, or a combination thereof.

In a case in which the coating layer is present on the surfaces of the lithium nickel-based oxide particles, contact between a non-aqueous electrolyte and the lithium composite transition metal oxide is suppressed by the coating layer, and, as a result, an effect of reducing gas generation or transition metal dissolution due to a side reaction with the non-aqueous electrolyte may be obtained.

The positive electrode active material may be included in an amount of 80 wt% to 99 wt%, specifically, 90 wt% to 99 wt% based on a total weight of solid content in a positive electrode slurry composition. In a case in which the amount of the positive electrode active material satisfies the above range, battery capacity of the positive electrode may be improved by securing sufficient positive electrode energy density.

The binder is a component that improves adhesion between positive electrode active material particles and adhesion between the positive electrode active material and the current collector, wherein the binder is typically added in an amount of 1 wt% to 30 wt% based on a total weight of solid content in a positive electrode active material layer. An example of the binder may be a polyvinylidene fluoride (PVDF)-based binder resin with a melting point of 170°C or higher.

According to an embodiment of the present disclosure, the binder may be included in an amount of 0.5 wt% to 3.5 wt%, particularly 0.5 wt% to 3.0 wt%, and more particularly 0.5 wt% to 1.5wt% in the solid content of the positive electrode slurry composition.

The positive electrode slurry composition may be prepared by additionally mixing or dispersing a conductive agent and a dispersant in a solvent in addition to the positive electrode active material and the binder, if necessary.

The conductive agent is not particularly limited as long as it has conductivity without causing adverse chemical changes in the battery, and, for example, carbon black such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorocarbon powder; metal powder such as aluminum powder, and nickel powder; conductive whiskers such as zinc oxide whiskers and potassium titanate whiskers; conductive metal oxide such as titanium oxide; or polyphenylene derivatives may be used.

The conductive agent may be included in an amount of 1.5 wt% or less, particularly 0.5 wt% to 1.0 wt%, and more particularly 0.6 wt% to 1.0 wt% in the solid content of the positive electrode slurry composition. In a case in which the amount of the conductive agent in the solid content of the positive electrode slurry composition satisfies the above range, electrical conductivity of the positive electrode may be improved by securing a positive electrode conductive network.

The dispersant suppresses a phenomenon of excessive aggregation of the positive electrode active material in the positive electrode slurry composition and allows the positive electrode active material to be effectively dispersed in the prepared positive electrode active material layer. The dispersant may include a hydrogenated nitrile-based copolymer, and may specifically be a copolymer containing an α,β-unsaturated nitrile-derived structural unit and a hydrogenated conjugated diene-derived structural unit, or a copolymer containing an α,β-unsaturated nitrile-derived structural unit, a conjugated diene-derived structural unit, and a hydrogenated conjugated diene-derived structural unit. As the α,β-unsaturated nitrile monomer, for example, acrylonitrile or methacrylonitrile may be used, and one alone or a mixture of two or more thereof may be used. As the conjugated diene-based monomer, for example, conjugated diene-based monomers having 4 to 6 carbon atoms, such as 1,3-butadiene, isoprene, or 2,3-methyl butadiene, may be used, and one alone or a mixture of two or more thereof may be used.

More specifically, the hydrogenated nitrile-based copolymer may be a hydrogenated nitrile-based butadiene rubber (H-NBR).

The dispersant may be included in an amount of 1.5 wt% or less, particularly 1.2 wt% or less, and more particularly 0.1 wt% to 1.0 wt% in the solid content of the positive electrode slurry composition. In a case in which the amount of the dispersant satisfies the above range, the positive electrode conductive network may be improved by suppressing aggregation of the conductive agent in the solid content of the positive electrode slurry composition.

In the case that the electrode prepared by the method of the present disclosure is the positive electrode, the electrode current collector is not particularly limited as long as it is a positive electrode collector having conductivity without causing adverse chemical changes in the battery. For example, stainless steel, aluminum, nickel, titanium, fired carbon, or aluminum or stainless steel that is surface-treated with one of carbon, nickel, titanium, silver, or the like may be used.

Specifically, the positive electrode collector may have a thickness of 3 µm to 500 µm, and microscopic irregularities may be formed on a surface of the positive electrode collector to improve adhesion to the positive electrode active material layer. For example, the positive electrode collector may be used in various shapes such as that of a film, a sheet, a foil, a net, a porous body, a foam body, a non-woven fabric body, and the like.

Also, the solvent used during the preparation of the electrode slurry composition may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content in the active material slurry including the positive electrode active material as well as optionally the binder and the conductive agent is in a range of 10 wt% to 90 wt%, preferably, 30 wt% to 80 wt%.

### (S2) Step of Rolling the Electrode

The method of preparing an electrode for a secondary battery according to the present disclosure may include a step of performing a rolling process on the dried electrode.

The rolling process may be performed by a roll press method, but is not limited thereto. For example, the rolling process may be performed by a hot press method.

Before performing the rolling process, porosity of the dried electrode active material layer may be 55% or less, particularly 35% to 55%, and more particularly 40% to 55%. In a case in which the porosity of the dried electrode active material layer satisfies the above range, it is desirable in that the rolling process of the dried electrode active material layer is easy.

The rolling process may be performed on the dried electrode active material layer once or multiple times, particularly 2 to 5 times, and more particularly 3 to 5 times. In this case, the rolling process may be performed until a rolling ratio of the electrode active material layer exceeds a specific numerical value. For example, the rolling ratio of the electrode active material layer after the rolling process may be 10% or more, particularly 10% to 17%, and more particularly 10% to 15%. In a case in which the rolling ratio of the electrode active material layer after the rolling process satisfies the above range, the number of rollings in the second rolling process may be minimized by sufficiently rolling the electrode active material as long as the electrode active material layer is not exfoliated.

Also, a thickness change rate after the rolling process may be 3.5% or less, particularly 0.1% to 3.5%, and more particularly 0.5% to 3.5%. In a case in which a thickness of the electrode active material layer after the rolling process satisfies the above range, a high-density electrode may be prepared while preventing the exfoliation of the electrode active material layer. If, in a case in which the thickness change rate during the rolling process is greater than 3.5%, since a low strength portion of the electrode active material layer (for example, a portion having a thickness thinner than an average thickness or edge portion) breaks, the electrode active material layer may be exfoliated from the electrode current collector.

Furthermore, after the rolling process, porosity of the electrode active material layer may be in a range of 20% to 36%, particularly 20% to 34%, and more particularly 25% to 34%. The porosity of the electrode active material layer after the rolling process is related to the thickness of the electrode active material layer after the rolling process. Thus, in a case in which the porosity of the electrode active material layer after the rolling process satisfies the above range, a high-density positive electrode may be prepared while preventing the exfoliation of the electrode active material layer.

### (S3) Step of Drying the Rolled Electrode

The method of preparing an electrode for a secondary battery according to the present disclosure may include a step of drying the rolled electrode.

In this case, the drying is performed at a temperature of 130°C or higher, but may be performed such that at least a partial range of drying temperature is 170°C to 210°C which is a temperature above the melting point (170°C) of the polyvinylidene fluoride (PVDF)-based binder resin.

The drying process may be performed by a roll-to-roll process method, but is not limited thereto.

Specifically, the drying of the rolled electrode may be performed as a three-step drying process while sequentially increasing the temperature. Specifically, the drying of the rolled electrode may include steps of: performing a first drying process at 130°C to 150°C; performing a second drying process at 150°C to 170°C; and performing a third drying process at 170°C to 210°C.

As described above, when performing the drying process after the rolling in the method of the present disclosure, since heat may be applied evenly to the active material or binder in the electrode layer by performing the drying process such that the drying temperature is sequentially increased from 130°C to 210°C, but a partial range of the drying temperature is 170°C to 210°C, a residual amount of moisture in the electrode may be effectively reduced to a desired level while minimizing a decrease in crystallinity of the polyvinylidene fluoride (PVDF)-based binder resin, and thus, an increase in resistance of the secondary battery may be prevented, the adhesion between the electrode active material layer and the current collector may be further improved, and an effect of improving productivity may be achieved.

In a case in which the drying process is performed while decreasing the temperature from a high temperature to a low temperature, for example, in a case in which, after a first process is performed at about 180°C to 170°C which is near the melting point (170°C) of the polyvinylidene fluoride (PVDF)-based binder resin, the drying process is performed while sequentially decreasing the temperature to 130°C, an imbalance of physical properties of the electrode is increased in the electrode as crystals of the partially melted polyvinylidene fluoride (PVDF) binder resin are irregularly and gradually grown, and there is a high possibility that a phenomenon of electrode brittleness is increased due to the irregularly grown crystals. Thus, as in the present disclosure, the polyvinylidene fluoride (PVDF)-based binder resin may be uniformly dissolved by performing the drying process such that the temperature is sequentially increased from 130°C, but the drying temperature of the partial drying process is above the melting point (170°C) of the polyvinylidene fluoride (PVDF)-based binder resin. Therefore, since an overall crystal size of the binder resin is formed uniformly even if a room temperature (rapid) cooling process is performed as a subsequent process, an electrode having similar overall physical properties may be prepared. Particularly, small crystals formed by the rapid cooling process may improve strength (toughness) of the electrode.

Total drying time of the rolled electrode may be in a range of 5 seconds or less, specifically, 2 seconds to 5 seconds.

In a case in which the drying time satisfies the above range, the residual amount of moisture in the electrode may be effectively reduced while minimizing the decrease in crystallinity. If, in a case in which the drying time is greater than the above range, a thickness or area of the electrode may be changed while the physical properties (adhesion, toughness) of the electrode are changed from those before the drying due to the decrease in crystallinity of the polyvinylidene fluoride (PVDF)-based binder.

The positive electrode may be suitably used as a positive electrode of a lithium secondary battery.

A lithium secondary battery including the above-described positive electrode will be described as an example.

The lithium secondary battery specifically includes a positive electrode, a negative electrode disposed to face the positive electrode, a separator disposed between the positive electrode and the negative electrode, and an electrolyte, wherein the above-described positive electrode is used as the positive electrode. Also, the lithium secondary battery may further include a case accommodating an electrode assembly in which the positive electrode, the separator, and the negative electrode are sequentially stacked.

Next, each component of the lithium secondary battery of the present disclosure will be described in more detail.

The negative electrode may be composed of a structure in which a negative electrode active material layer is formed on one surface or both surfaces of a negative electrode collector in the form of a long sheet, wherein the negative electrode active material layer may include a negative electrode active material, and may optionally further include a conductive agent and/or binder.

Specifically, a compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a silicon-based material such as Si, a Si-Me alloy (where Me is at least one selected from the group consisting of Al, tin (Sn), Mg, Cu, Fe, lead (Pb), Zn, Mn, Cr, Ti, and Ni),SiO_{y} (where 0<y<2), and a Si-C composite; a lithium metal thin film; or a metallic material alloyable with lithium such as Sn and Al, and any one thereof or a mixture of two or more thereof may be used.

Preferably, the negative electrode active material of the present disclosure may include at least one of a carbon-based negative electrode active material and a silicon-based negative electrode active material.

The silicon-based negative electrode active material may be Si, a Si-Me alloy (where Me is at least one selected from the group consisting of Al, Sn, Mg, Cu, Fe, Pb, Zn, Mn, Cr, Ti, and Ni),SiO_{y} (where 0<y<2), a Si-C composite, or a combination thereof, and may preferably be SiO_{y} (where 0<y<2). Since the silicon-based negative electrode active material has high theoretical capacity, capacity characteristics may be improved when the silicon-based negative electrode active material is included.

The silicon-based negative electrode active material may be doped with M^{b} metal, and, in this case, the M^{b} metal may be a Group 1 metal element or a Group 2 metal element, and may specifically be lithium (Li) or Mg. Specifically, the silicon-based negative electrode active material may be Si, SiO_{y} (where 0<y<2), and a Si-C composite which are doped with the M^{b} metal. With respect to the metal-doped silicon-based negative electrode active material, capacity of the active material is somewhat reduced due to the doping element, but, since it has high efficiency, high energy density may be achieved.

Also, the silicon-based negative electrode active material may further include a carbon coating layer on surfaces of particles. In this case, a carbon coating amount may be 20 wt% or less, preferably, 1 wt% to 20 wt% based on a total weight of the silicon-based negative electrode active material.

The conductive agent is a component for further improving conductivity of the negative electrode active material, wherein the conductive agent may be added in an amount of 1 wt% to 20 wt% based on a total weight of solid content in the negative electrode active material layer. Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The binder is a component that assists in the binding between the conductive agent, the active material, and the current collector, wherein the binder is commonly added in an amount of 1 wt% to 30 wt% based on the total weight of the solid content in the negative electrode active material layer. Examples of the binder may be a fluorine resin-based binder including polyvinylidene fluoride or polytetrafluoroethylene; a rubber-based binder including a styrene butadiene rubber, an acrylonitrile-butadiene rubber, or a styrene-isoprene rubber; a cellulose-based binder including carboxymethylcellulose, starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The negative electrode may be prepared according to a method of preparing a negative electrode which is known in the art. For example, the negative electrode may be prepared by a method in which a negative electrode active material slurry is prepared by dissolving or dispersing the negative electrode active material as well as optionally the binder and the conductive agent in a solvent and a negative electrode collector is coated with the negative electrode active material slurry, rolled, and dried to form a negative electrode active material layer, or may be prepared by casting the negative electrode active material layer on a separate support and then laminating a film separated from the support on the negative electrode collector.

The negative electrode collector generally has a thickness of 3 µm to 500 µm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may include various shapes such as a film, a sheet, a foil, a net, a porous body, a foam body, a non-woven fabric body, and the like.

The solvent may include water or an organic solvent, such as NMP and alcohol, and may be used in an amount such that desirable viscosity is obtained when the negative electrode active material as well as optionally the binder and the conductive agent is included. For example, the solvent may be included in an amount such that a concentration of the solid content in the active material slurry including the negative electrode active material as well as optionally the binder and the conductive agent is in a range of 50 wt% to 75 wt%, preferably, 50 wt% to 65 wt%.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for a non-aqueous electrolyte as well as low resistance to the transfer of non-aqueous electrolyte ions is preferable.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Various electrolytes usable in a lithium secondary battery, for example, an organic liquid electrolyte, an inorganic liquid electrolyte, a solid polymer electrolyte, a gel-type polymer electrolyte, a solid inorganic electrolyte, or a molten-type inorganic electrolyte may be used as the electrolyte used in the present disclosure, and a type thereof is not particularly limited.

Also, the electrolyte may include an organic solvent and a lithium salt.

Any organic solvent may be used as the organic solvent without particular limitation so long as it may function as a medium through which ions involved in an electrochemical reaction of the battery may move. Specifically, a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC);an ester-based solvent such as methyl acetate and ethyl acetate; an ether-based solvent such as dibutyl ether or tetrahydrofuran; a ketone-based solvent such as cyclohexanone; an aromatic hydrocarbon-based solvent such as benzene and fluorobenzene; an alcohol-based solvent such as ethyl alcohol and isopropyl alcohol; amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, an additive may be further included in the electrolyte. For example, as the additive, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be used alone or in a mixture thereof, but the present disclosure is not limited thereto. The additive may be included in an amount of 0.1 wt% to 10wt%, preferably, 0.1 wt% to 5 wt% based on a total weight of the electrolyte.

The lithium secondary battery according to the present disclosure as described above may be suitably used in portable devices, such as mobile phones, notebook computers, and digital cameras, and electric cars such as hybrid electric vehicles (HEVs) .

Hereinafter, the present disclosure will be described in more detail, according to examples. However, the following examples are merely presented to exemplify the present disclosure, and the scope of the present disclosure is not limited thereto.

### [Examples]

### Example 1.

### (1) Preparation of Positive Electrode Slurry Composition

A positive electrode slurry composition (solid content: 70 wt%) was prepared by adding a positive electrode active material (Li(Ni_{0.86}Mn_{0.07}Co_{0.05}Al_{0.02})O₂), carbon nanotubes as a conductive agent, and polyvinylidene fluoride (PVDF), as a binder, in a weight ratio of 97:1:2 to N-methyl-2-pyrrolidone (NMP) as a solvent.

### (2) Positive Electrode Preparation

The above-prepared positive electrode slurry composition was coated on a 15 µm thick aluminum thin film current collector and then dried at 130°C for 1 minute to form a positive electrode active material layer (thickness: 218 µm).

Subsequently, after a rolling process was performed on the dried positive electrode active material layer until a thickness of the positive electrode active material layer became 164 µm, a positive electrode was prepared by sequentially performing steps of: performing a first drying process at 130°C, performing a second drying process at 150°C, and performing a third process at 170°C. Total drying time was within 5 seconds.

### Example 2.

The positive electrode slurry composition prepared in Example 1 was coated on a 15 µm thick aluminum thin film current collector and then dried at 130°C for 1 minute to form a positive electrode active material layer (thickness: 218 µm).

Subsequently, after a rolling process was performed on the dried positive electrode active material layer until a thickness of the positive electrode active material layer became 164 µm, a positive electrode was prepared by sequentially performing steps of: performing a first drying process at 150°C, performing a second drying process at 170°C, and performing a third process at 190°C. Total drying time was within 5 seconds.

### Example 3.

The positive electrode slurry composition prepared in Example 1 was coated on a 15 µm thick aluminum thin film current collector and then dried at 130°C for 1 minute to form a positive electrode active material layer (thickness: 218 µm).

Subsequently, after a rolling process was performed on the dried positive electrode active material layer until a thickness of the positive electrode active material layer became 164 µm, a positive electrode was prepared by sequentially performing steps of: performing a first drying process at 150°C, performing a second drying process at 170°C, and performing a third drying process at 210°C. Total drying time was within 5 seconds.

### Comparative Example 1.

The positive electrode slurry composition prepared in Example 1 was coated on a 15 µm thick aluminum thin film current collector and then dried at 130°C for 1 minute to form a positive electrode active material layer (thickness: 218 µm).

Subsequently, after a rolling process was performed on the dried positive electrode active material layer until a thickness of the positive electrode active material layer became 164 µm, a positive electrode was prepared by sequentially performing steps of: performing a first drying process at 110°C, and performing a second drying process at 130°C. Total drying time was within 5 seconds.

### Comparative Example 2.

The positive electrode slurry composition prepared in Example 1 was coated on a 15 µm thick aluminum thin film current collector and then dried at 130°C for 1 minute to form a positive electrode active material layer (thickness: 218 µm).

Subsequently, after a rolling process was performed on the dried positive electrode active material layer until a thickness of the positive electrode active material layer became 164 µm, a drying process was performed at 130°C for 5 seconds.

### [Experimental Examples]

### Experimental Example 1.Measurement of Residual Amount of Moisture in the Positive Electrode Active Material Layer

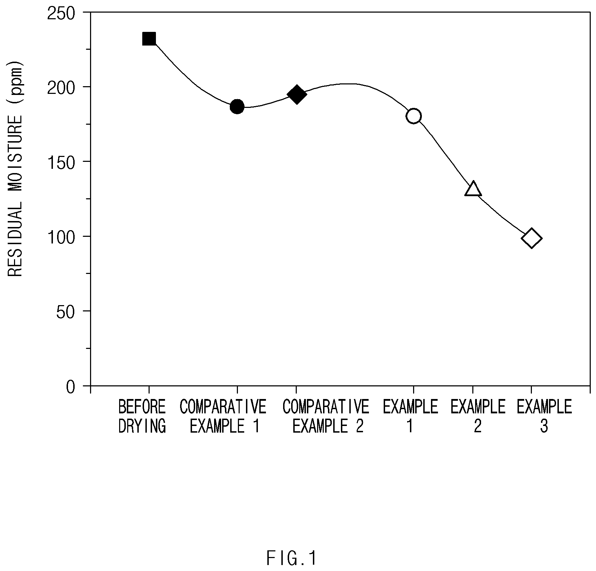

A solvent (moisture) content of each of the positive electrodes prepared in Examples 1 to 3 and the positive electrodes prepared in Comparative Examples 1 and 2 was measured by Karl Fischer titration. Specifically, each of the positive electrodes prepared in Examples 1 to 3 and the positive electrode prepared in Comparative Example 1 was cut into small pieces of 5 cm × 5 cm in a glove box filled with argon gas. The cut positive electrode with a size of 5 cm × 5 cm was weighed in a sample vial. Thereafter, the weighed positive electrode was measured three times repeatedly using a Karl Fischer coulometry moisture analyzer (831 KF Coulometer, Metrohm, Switzerland), and an average value was calculated. The results thereof are presented in FIG. 1 below.

Referring to FIG.1, it may be confirmed that residual amounts of moisture in the positive electrodes prepared in Examples 1 to 3 of the present disclosure were significantly reduced in comparison to those of the positive electrodes prepared in Comparative Examples 1 and 2.

### Experimental Example 2.Evaluation of Adhesion to the Electrode Current Collector

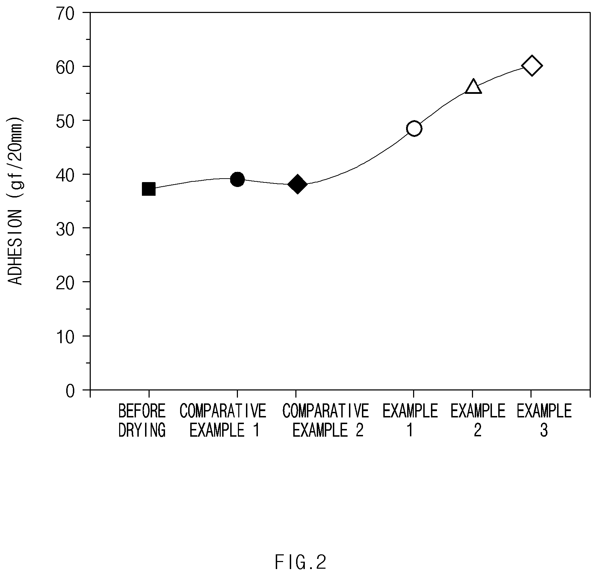

After each of the positive electrodes prepared in Examples 1 to 3 and the positive electrodes prepared in Comparative Examples 1 and 2 was cut to 20 mm wide/125 mm long and fixed on slide glass, the current collector was peeled off to measure 90° peel strength. The measurement was repeated three times, an average value was calculated, and the results thereof are presented in FIG. 2.

Referring to FIG. 2, it may be confirmed that adhesions of the positive electrodes prepared in Examples 1 to 3 of the present disclosure were significantly increased in comparison to those of the positive electrodes prepared in Comparative Examples 1 and 2.

## Claims

1. A method of preparing an electrode for a secondary battery, the method comprising steps of:
preparing an electrode in which an electrode active material layer is formed on an electrode current collector;
rolling the electrode; and
drying the rolled electrode,
wherein the drying is performed such that at least a partial range of drying temperature is 170°C to 210°C.

2. The method of claim 1, wherein total drying time of the rolled electrode is in a range of 2 seconds to 5 seconds.

3. The method of claim 1, wherein the drying of the rolled electrode is performed by a roll-to-roll process.

4. The method of claim 1, wherein the drying of the rolled electrode is performed at a temperature of 130°C or higher.

5. The method of claim 1, wherein a step of performing a first drying process at 130°C to 150°C; a step of performing a second drying process at 150°C to 170°C; and a step of performing a third drying process at 170°C to 210°C are sequentially performed in the drying of the rolled electrode.

6. The method of claim 1, wherein the electrode active material layer comprises an electrode active material and a binder, and
the electrode active material comprises a positive electrode active material or a negative electrode active material.

7. The method of claim 6, wherein the binder comprises a polyvinylidene fluoride-based resin.

8. The method of claim 6, wherein the electrode active material is the positive electrode active material.

9. The method of claim 8, wherein the positive electrode active material comprises a lithium-nickel-cobalt-transition metal (M) oxide represented by Formula 1:
[Formula 1] LiₐNiₓCo_{y}M¹_{z}M²O₂
wherein, in Formula 1, M¹ is manganese (Mn), aluminum (Al),or a combination thereof, M² is at least one selected from the group consisting of Al, zirconium (Zr), tungsten (W), titanium (Ti), magnesium (Mg), calcium (Ca), and strontium (Sr), and 0.8≤a≤1.2,0.55≤x<1,0<y≤0.3,0<z≤0.3, and 0<w≤0.2.

10. The method of claim 9, wherein the positive electrode active material has a nickel (Ni) content of 55% or more.

11. The method of claim 1, wherein the electrode is a positive electrode.
